# EUROPEAN PATENT APPLICATION

(11) **EP 1 051 005 A2**
(43) Date of publication of application: **08.11.2000**
(21) Application number: 00401029.4
(22) Date of filing: 13.04.2000
(51) Int. Cl.: H04L 27/26, H04L 5/06

(54) **Separation of original and image spectra of a multicarrier signal, together with a signal structure for facilitating the separation**

(30) Priority: 07.05.1999 ES 9900958
(71) Applicant: ALCATEL, 75008 Paris (FR)
(72) Inventor: Gonzalez Ahijado, Angel, 28916 Leganes, Madrid (ES)
(74) Representative: Lamoureux, Bernard

(57) **Abstract**

Method for separating an original spectrum and its corresponding image spectrum in an OFDM signal and signal obtained by said method, which consists in forcing a predetermined number of sub-carriers (S₁, S₂, ..., Sₙ) to zero value, said sub-carriers being situated at one end of the spectrum. Said sub-carriers are either from the original spectrum itself or they are added to the original spectrum.

## Description

The present invention relates to a method for separating the spectrum and the image spectrum of an orthogonal frequency division multiplex signal, said signal being generally termed OFDM, and the signal obtained by said method. More specifically, the invention proposes the separation of an original spectrum of an OFDM signal and its respective image spectrum by setting to zero at least one sub-carrier at a suitable position in said signal.

### BACKGROUND OF THE INVENTION

In an orthogonal frequency division multiplex access system (OFDMA system), the signals take the form of a spectrum that contains a plurality of sub-carriers that hold the information to be transmitted. Said information is split between the sub-carriers in such a manner that they all carry some part of the information. This implies that all the sub-carriers have the same importance with regard to the content of the information transmitted.

On the other hand, the OFDMA digital signal, when it is transmitted, has a spectrum adjacent to the original spectrum that is a repeat of the latter though in analogue form due to the digital-to-analogue conversion to which it is subjected. This repeat spectrum is termed the image spectrum. The repeat of the image spectrum adjacent to the original spectrum is produced in such a way that the first follows the second with no separation between the two.

Since there is no clear space between the original spectrum and the image spectrum, filtering of the transmitted signal is complicated, since in practice the response of a conventional filter produces a certain roll-off slope at the cut-off frequency point since its characteristics are not ideal in practice, i.e., the angle of the slope is substantially greater than 90°. The consequence of this is that, when carrying out the filtration process, the sub-carriers the respective frequencies of which have values close to that of the cut-off frequency are subjected to the filtration and non-linearities in the vicinity of said cut-off frequency and, consequently, the filtration in this region deforms the sub-carriers, giving rise to the loss of the information they were holding.

To avoid this loss of information a known solution is to employ high quality filters with responses that come close to ideal conditions, i.e., which have a response in the region of the cut-off frequency which rolls off at an angle which is substantially close to 90°. However, filters of this type are complicated to build and are, therefore, expensive. In addition, although their response is better than that of conventional filters, the roll-off slope angle continues to be somewhat greater than 90° and, consequently, there shall always be the possibility that some part of the information held in the sub-carriers located in the proximity of the cut-off frequency shall be lost.

For the foregoing reasons, there exists a need to provide a method for generating an OFDM signal such that once transmitted it can be filtered in a conventional and, consequently, inexpensive filter, without loss of information held in the sub-carriers during the filtration process.

### DESCRIPTION OF THE INVENTION

To overcome the problems outlined above the method for separating the spectrum and the image spectrum of an OFDM signal, and the signal so obtained, objects of the present invention, have been proposed.

Thus an object of the present invention is to provide a method for separating an original spectrum and its corresponding image spectrum in an OFDM signal, which is characterised in that:
- at least one end sub-carrier of said original spectrum is forced to zero value being left thereby free of information; or
- at least one sub-carrier of a plurality of additional sub-carriers added to an end of the original spectrum is forced to zero value being left thereby free of information.

According to an embodiment of the invention the method is characterised in that a pre-determined number of the sub-carriers of the OFDM signal, the respective frequencies of which have values in the proximity of the cut-off frequency of a conventional filter, are forced to zero value.

According to another embodiment of the invention the method is characterised in that it employs an inverse discrete Fourier transform applied to the original signal transmitted with a number of stages that is a multiple of the number of the sub-carriers of said original signal, generating thereby said additional sub-carriers that are added to the sub-carriers of the original spectrum to force them to zero value.

Another object of the invention is to provide an OFDM signal that is characterised in that:
- at least one end sub-carrier of said original spectrum has zero value and is therefore free of information; or
- at least one sub-carrier of a plurality of additional sub-carriers added to an end of the original spectrum has zero value and is therefore free of information.

According to an embodiment of the invention said OFDM signal is characterised in that a pre-determined number of the sub-carriers of the OFDM signal, the respective frequencies of which have values in the proximity of the cut-off frequency of a conventional filter, have zero value.

According to another embodiment of the invention said OFDM signal is characterised in that the additional sub-carriers are obtained by means of an inverse discrete Fourier transform applied to the original signal transmitted with a number of stages that is a multiple of the number of the sub-carriers of said original signal.

### BRIEF DESCRIPTION OF THE DRAWINGS

Figure 1 is a schematic representation of a conventional OFDM signal in amplitude and frequency coordinates showing also schematically the image spectrum of said signal.

Figure 2 is a schematic representation of an OFDM signal in amplitude and frequency coordinates according to a first embodiment of the invention, and showing also schematically the image spectrum of said signal.

Figure 3 is a schematic representation of an OFDM signal in amplitude and frequency coordinates according to a second embodiment of the invention, and showing also schematically the image spectrum of said signal.

### DESCRIPTION OF A PREFERRED EMBODIMENTS

It is to be pointed out that in the following description any reference to conventional filters must be understood to concern commercially available filters, of reduced complexity and cost.

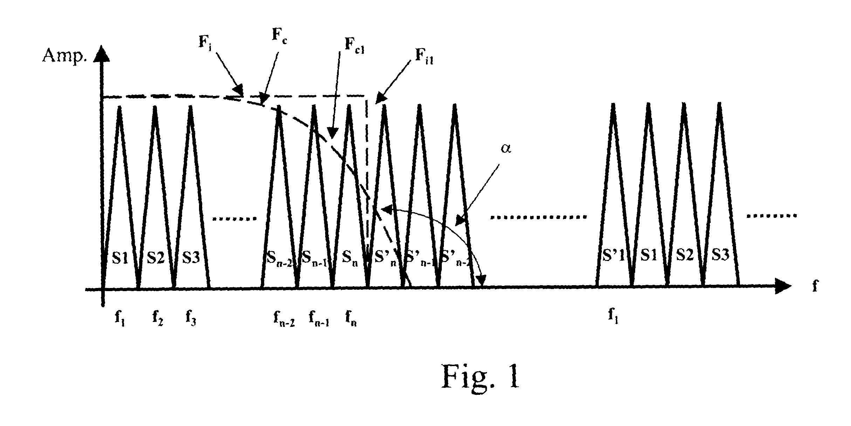

With reference to figure 1, an OFDM signal of conventional type is shown consisting of a plurality of sub-carriers S₁, S₂, S₃, ..., Sₙ. Each sub-carrier is a narrow-band signal, i.e., it occupies a reduced frequency band centred on f₁, f₂, f₃, ..., fₙ, respectively, within the general frequency band that the original signal occupies. The group of said sub-carriers forms the socalled spectrum of the OFDM signal. Once this original signal is transformed into analogue form, a spectrum adjacent to the original signal spectrum is produced, the form of which is a repetition of the form of the latter though in inverted order. To the spectrum so generated, the term image spectrum is given. While the original signal is digital, its image spectrum is analogue. In figure 1 the image spectrum is represented by a plurality of sub-carriers S'ₙ, S'ₙ₋₁, S'ₙ₋₂, ..., S'₁.

As can be observed in said figure, sub-carrier Sₙ of the original signal is followed by sub-carrier S'ₙ of the image spectrum, giving rise to there being no separation in frequency between the original signal spectrum and the image spectrum.

Before transmitting the signal obtained, it has to be submitted to a filtration process. The frequency response of an ideal filter for performing the filtration task is shown in figure 1 by the line Fᵢ for which the roll-off slope Fᵢ₁ forms an angle of 90°, which means the filtration would not degrade the sub-carriers in the region of the cut-off frequency and, consequently, there would be no loss of information. However, in practice, filters are not ideal.

The frequency response of a conventional filter for performing the filtration task is also shown in figure 1 by means of the line F_{c} for which the roll-off slope F_{c1} forms an angle α greater than 90°. In this case, as can be seen, the end sub-carriers, for example S_{n,} S_{n-1,} Sₙ₋₂, suffer impairment, with the consequent loss of information in them, since the roll-off slope F_{c1} does not have an ideal shape. Simultaneously, the image spectra S'ₙ, S'ₙ₋₁, S'ₙ₋₂ are not effectively suppressed.

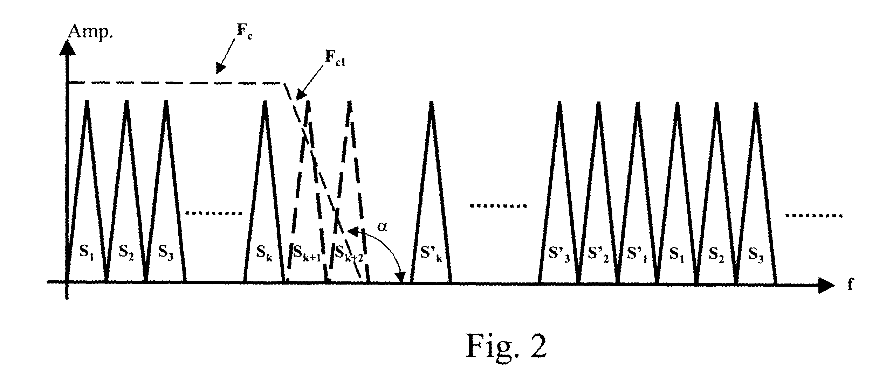

Figure 2 represents an OFDM signal constituted according to a first embodiment of the invention. In said figure the frequency band response for a conventional filter F_{c} that produces a roll-off slope F_{c1} is shown.

Assuming that the signal transmitted is the same as that shown in figure 1, the corresponding spectrum shall have a plurality of sub-carriers S₁, S₂, S₃ ..., Sₖ, Sₖ₊₁, ..., Sₙ.

Zero value is allocated to the sub-carriers Sₖ₊₁, Sₖ₊₂, ..., Sₙ, i.e., they are provided with no information. In practice, the signal goes through an inverse Fourier transform, and those inputs that correspond to the sub-carriers Sₖ₊₁, Sₖ₊₂, ..., Sₙ are grounded. In figure 2 these sub-carriers are shown with dashed lines.

The choice of the value K in Sₖ₊₁, i.e., the determination of the sub-carrier frequency from which the sub-carriers are to be forced to zero, shall depend mainly on the cut-off frequency in the conventional filter response. The main criterion in this regard is to avoid the roll-off slope F_{c1} in the filter frequency response coinciding with sub-carriers that hold information.

Thus, a filtration process carried out by a conventional filter does not impair the sub-carriers that hold information, since the degradation occurs in the sub-carriers with zero value, i.e. those which hold no information. In addition, the image spectra are suppressed since they are not located within the band with roll-off slope F_{c1}.

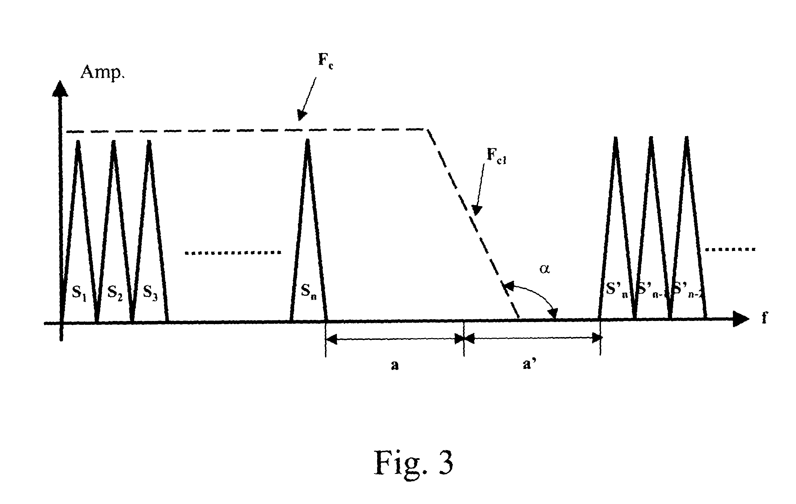

Figure 3 represents an OFDM signal constituted according to an alternative embodiment of the invention. In said figure the frequency band response of a conventional filter F_{c} that produces a roll-off slope F_{c1} is shown.

In this case it is also assumed that the signal to be processed is that illustrated in figure 1. Once the signal is transmitted, it is subjected to an inverse discrete Fourier transform (IDFT) process. In said process, it is opted to employ a number of stages which is a multiple of the number of the sub-carriers of the original signal spectrum, generating thereby a number of additional inputs which are forced to zero value in the manner described in the embodiment of figure 2.

For example, if 64 sub-carriers are employed in the transmission of the original signal, it is possible to use an IDFT with 128 stages instead of one with 64 stages, producing in this way 64 additional inputs or sub-carriers which do not hold information and consequently take the value of zero. In figure 3, the additional inputs or sub-carriers have not been shown in order to simplify the diagram. However the frequency band that corresponds to said additional inputs or sub-carriers is marked with the double-headed arrow "a", and its image spectrum by the double-headed arrow "a'".

In this case, the sub-carriers that hold information, S₁, S₂, S₃,..., Sₙ are significantly separated from the sub-carriers of the image spectrum S'ₙ, S'ₙ₋₁, S'ₙ₋₂, ..., S'₁. This permits a greater level of simplification in the filtration process and, consequently, a greater reduction in the cost of the filter.

It is to be pointed out that although the description of the invention and the embodiments described above make reference to setting to zero the end sub-carriers in the spectrum, the invention is applicable equally and in like manner to the alternative option of setting to zero one or more of the first sub-carriers of the original spectrum of the OFDM signal.

Also, in this last case the determination of the range of frequency in which the sub-carriers have to take zero value shall depend mainly on the cut-off frequency in the response of the conventional filter that is used.

## Claims

1. **Method for separating an original spectrum and its corresponding image spectrum in an OFDM signal**, said original spectrum comprising a plurality of sub-carriers (S₁, S₂, S₃, ..., Sₙ) in which a first sub-carrier and a last sub-carrier are end sub-carriers of said original spectrum, **characterised** in that:
- at least one end sub-carrier of said original spectrum is forced to zero value being left thereby free of information; or
- at least one sub-carrier of a plurality of additional sub-carriers added to an end of the original spectrum is forced to zero value being left thereby free of information.

2. **Method** according to claim 1, **characterised** in that a pre-determined number of the sub-carriers of the OFDM signal, the respective frequencies of which have values in the proximity of the cut-off frequency (F_{c1}) of a conventional filter, are forced to zero value.

3. **Method** according to claim 1, **characterised** in that it employs an inverse discrete Fourier transform applied to the original signal transmitted with a number of stages that is a multiple of the number of the sub-carriers of said original signal, generating thereby said additional sub-carriers which are added to the sub-carriers of the original spectrum in order to force them to zero value.

4. **An OFDM signal** comprising an original spectrum which includes a plurality of sub-carriers (S₁, S₂, S₃, ..., Sₙ) in which a first sub-carrier and a last sub-carrier are end sub-carriers of said original spectrum, **characterised** in that:
- at least one end sub-carrier of said original spectrum has zero value and is therefore free of information; or
- at least one sub-carrier of a plurality of additional sub-carriers added to an end of the original spectrum has zero value and is therefore free of information.

5. **An OFDM signal** according to claim 4, **characterised** in that a pre-determined number of the sub-carriers of the OFDM signal, the respective frequencies of which have values in the proximity of the cut-off frequency (F_{c1}) of a conventional filter, have zero value.

6. **An OFDM signal** according to claim 4, **characterised** in that the additional sub-carriers are obtained by means of an inverse discrete Fourier transform applied to the original signal transmitted with a number of stages that is a multiple of the number of the sub-carriers of said original signal.
